# EUROPEAN PATENT APPLICATION

(11) **EP 2 749 365 A1**
(43) Date of publication of application: **02.07.2014**
(21) Application number: 13188971.9
(22) Date of filing: 16.10.2013
(51) Int. Cl.: B21D 39/03, B21J 15/02, B21J 15/28, B23P 19/06

(54) **Monitoring method for a joining process**

(30) Priority: 20.12.2012 DE 102012025047
(71) Applicant: Newfrey LLC, Newark, Delaware 19711 (US)
(72) Inventor: Bloecher, Michael, 35394 Giessen (DE); Masak, Jan, 35394 Giessen (DE)
(74) Representative: Witte, Weller & Partner Patentanwälte mbB

(57) **Abstract**

Method for monitoring a mechanical joining process, in particular a punch-riveting or clinching process, the joining process being performed by means of a joining tool (12), which has a frame (30), a punch (34) that is displaceable on the frame (30) along a joining axis (38), a die (32) that is mounted on the frame (30), and a hold-down device (40), which is mounted in an axially displaceable manner on the punch (34) and biased in a joining direction, the method comprising the steps, during the joining process: acquiring the punch force (F) exerted by the punch (34), acquiring the relative travel (S_{R}) of the punch (34) in relation to the hold-down device (40); and plotting a joining curve (60) of punch force (F) over the relative travel (S_{R}).

## Description

The present invention relates to a method for monitoring a mechanical joining process, in particular a punch-riveting or clinching process, the joining process being performed by means of a joining tool, which has a frame, a punch that is displaceable on the frame along a joining axis, a die that is mounted on the frame, and a hold-down device, which is mounted in an axially displaceable manner on the punch and biased in a joining direction.

Further, the present invention relates to a joining device having a joining tool of the type described above, and having a control device, which is set up to execute the method.

Such a method and such a joining device are known from the document EP 1 228 824 B1.

Known from this document EP 1 228 824 B1 is a method for riveting, punching and punch-riveting with a counterforce structure such as a C-frame, the deformation of the counterforce structure being acquired by a monitoring unit during the joining operation, and a motional sequence during the joining operation being corrected in dependence on the deformation. Further, it is known from this document that a joining device used for this purpose is provided with a first sensor and a second sensor, the first sensor measuring the relative movement between a pick-up and the counterforce structure, and the second sensor measuring the relative movement between the pick-up and a punch or between the punch and the counterforce structure, and said joining device is further provided with means for correcting the depth of the riveting or punching or of the rivet-head protrusion, on the basis of the two measurement values. During operation, a monitoring unit can receive the measurement values of the two sensors, and from these values determine and plot the deformation of the counterforce structure. Further, the contact of the punch and of the pick-up on a workpiece can be acquired by measuring the punch force. In this case, calibration can be effected by measuring a reference position. From this, the actual depth of the riveting or punching, and the length of the riveting, can be determined. The relative offset between the punch and the pick-up at the lowest point determines the penetration depth or the rivet-head protrusion. The deformation of the counterforce structure acquired by the first sensor can be plotted as a quality signal.

The document EP 1 228 824 B1 therefore deals with the adaptation of a joining process, during the joining operation, in dependence on displacement sensors, which acquire, in particular, a deformation of the frame (counterforce structure, or C-frame). In this case, this deformation of the counterforce structure is to be plotted as a quality signal.

For the purpose of monitoring mechanical joining processes, it is also known to plot a curve of punch force over punch travel. In this case, a displacement of the hold-down device during the joining process can also be plotted concomitantly, and is included in the joining curve. The displacement of the hold-down device during the joining process can be effected in this case by a deformation of the frame (e.g. C-frame), but also by one or more air gaps in the workpiece arrangement to be joined and/or by adhesive disposed between the workpieces.

This displacement causes the joining curve to be extended in certain (non-reproducible) regions, making it difficult to compare joining curves from successive joining processes.

Against this background, it is the object of the invention to specify an improved monitoring method for a mechanical joining process, and an improved joining device.

The above object is achieved, on the one hand, by a method for monitoring a mechanical joining process, in particular a punch-riveting or clinching process, the joining process being performed by means of a joining tool, which has a frame, a punch that is displaceable on the frame along a joining axis, a die that is mounted on the frame, and a hold-down device, which is mounted in an axially displaceable manner on the punch and biased in a joining direction, the method comprising the steps, during the joining process: acquiring the punch force exerted by the punch, acquiring the relative travel of the punch in relation to the hold-down device, and plotting a joining curve of punch force over the relative travel.

Further, the above object is achieved by a joining device comprising a joining tool, and comprising a control device that is realized and set up to execute the method according to the invention.

The plotting, according to the invention, of a joining curve of punch force over the relative travel between the punch and the hold-down device enables the plotted joining curves to be free of unwanted joining process influences. Such influences can be, for example, differing applications, or differing types of adhesive, unforeseeable gaps between the workpieces, and a deformation of the frame, in particular a bending-up of a C-frame.

The joining curve preferably constitutes a representation purely of the penetration of the rivet into the workpieces (in the case of punch-riveting), or purely the deformation of the workpieces (in the case of clinching). Consequently, the joining curves become comparable.

The method according to the invention is suitable for punch-riveting and for clinching, but also in the case of conventional full-rivet processes. The punch rivets used can be semi-hollow punch rivets or solid, full punch rivets.

The punch force can be only the force exerted by the punch. In the present case, the punch force acquired is a force that includes the punch force and the hold-down force exerted, through the bias, by the hold-down device.

The object is thereby achieved in full.

According to a particularly preferred embodiment, the punch travel of the punch relative to the frame, and the hold-down device travel of the hold-down device relative to the frame, are acquired during the joining process, the relative travel being acquired by forming a difference between the punch travel and the hold-down device travel.

The punch travel and the hold-down device travel can each be acquired comparatively easily, for example in a manner such as that described in the document EP 1 228 824 B1. In respect of the acquisition of the punch path and of the hold-down device path, and in respect of the design of the joining tool, reference is made to the full scope of the disclosed content of this document.

In an alternative embodiment, the relative travel is measured directly during the joining process.

In the case of a direct measurement of the relative travel, a sensor is provided, which is disposed on the punch or on the hold-down device.

According to a further preferred embodiment, a plurality of joining curves from successive joining processes are plotted and are represented in a superimposed manner.

In this case, by eliminating joining process influences, it is possible for these joining curves, represented in a superimposed manner, to be compared with each other in an efficient manner. This, in turn, makes it possible for deviations from a reference joining curve to be identified at an early stage, such that, for example, servicing or the like can be initiated in good time.

Overall, it is furthermore advantageous if a relative reference position between the punch and the hold-down device is determined before the joining process.

Such a relative reference position makes it possible, in particular, to acquire, for subsequent joining processes, the relationship of the punch position to the hold-down device position. This makes it possible, for example, to monitor the end position of the joining process (for example, end position of a riveting) from the joining curve. In this case, such an end position has a direct relationship to, for example, a rivet-head protrusion. Through the setting up of an appropriate monitoring window, for example in the case of punch-riveting processes, such a rivet-head protrusion can be monitored in this manner, or acquired with precision for the respective joining process.

The rivet-head protrusion in this case can be a protrusion in the actual sense, in which a portion of the rivet projects "positively" in relation to a surface of the workpiece. However, the rivet-head protrusion can also be "negative", in which case a rivet surface is countersunk in relation to the surface of the workpiece.

Overall, it is preferred in this case if the relative reference position is that position of the punch, relative to the hold-down device, at which a punch end face is flush with an end face of the hold-down device.

Such a relative reference position can be determined comparatively easily, for example by means of an adjustment pass of the joining tool, in which a reference surface is prepared, onto which the punch is pressed such that it comes into bearing contact, and on which the hold-down device also rests when the punch is in bearing contact.

Further, it is advantageous overall if the plotting of the joining curve is commenced in dependence on a punch force threshold.

Alternatively, it is possible for the joining curve to be commenced in dependence on a particular magnitude of the relative travel.

As the exertion of a punch force commences, there might first be a deformation of a bias spring between the punch and the hold-down device, and/or elimination of an air gap, and/or bending-up of the frame.

For the monitoring of the joining process, however, it is only that phase at which a deformation of at least one workpiece is effected that is crucial, for example the phase at which a punch rivet penetrates into the workpieces.

Consequently, it is advantageous if the plotting of the joining curve is commenced only when particular influences of the joining process have been eliminated.

According to a further preferred embodiment, the length of a joining element used in the joining process is determined as part of the monitoring operation.

This can be effected, for example, in that the relative travel between the commencement of the plotting of the joining curve and the end of the joining curve is measured, this travel length corresponding to the length of the joining element used.

It is furthermore advantageous overall if, as mentioned above, an end position of the joining process is monitored on the basis of the plotted joining curve, the end position being able to correspond, for example, to a rivet-head protrusion.

It is understood that the above-mentioned features and those yet to be explained in the following can be applied, not only in the respectively specified combination, but also in other combinations or singly, without departure from the scope of the present invention.

Exemplary embodiments of the invention are represented in the drawing and explained more fully in the following description. In the drawing:
Fig. 1 shows a schematic representation of a joining device according to the invention; and
Fig. 2 shows a joining curve plotted according to the invention.

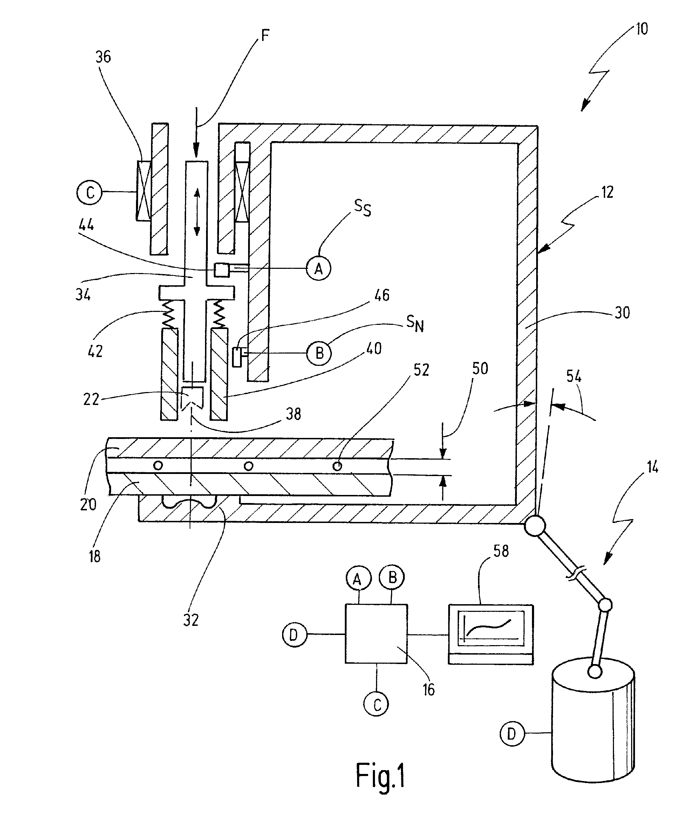

In Fig. 1, a joining device, in the form of a punch-riveting device, is represented in schematic form and denoted in general by 10. The joining device 10 comprises a joining tool 12, which is fixed to a robot 14 and can be moved two-dimensionally or three-dimensionally in space. Alternatively, the joining tool 12 can also be disposed in a stationary manner.

The joining device 10 additionally comprises a control device 16, which operates the joining tool 12, and optionally comprises the robot 14.

The joining device 10 is used for joining together a first workpiece 18 and a second workpiece 20, which can be composed of metal or plastic or composite materials, said joining being effected by means of a punch rivet 22. The punch rivet 22 can be a semi-hollow or a full punch rivet. The joining device 10 can also be used to join together more than two workpieces. The workpieces are preferably plates.

The joining device 10 is preferably used in the field of body construction for motor vehicles.

The joining tool 12 comprises a C-frame 30 composed of a solid material. Mounted at one end of the C-frame 30 there is a die 32. Mounted at the other end of the C-frame there is a punch 34. The punch 34 can be moved along a joining axis 38 by means of a punch drive 36. A hold-down device 40 is mounted so as to be displaceable, parallel to the joining axis 38, on the punch 34. The hold-down device 40 in this case is biased in the joining direction, i.e. in the direction towards the die 32, by means of a pressure spring 42.

The joining device 10 further comprises a punch displacement sensor 44, which acquires a punch travel S_{S} relative to the C-frame 30. Further, the joining tool 12 comprises a hold-down device displacement sensor 46, which acquires the hold-down device travel S_{N} of the hold-down device 40 relative to the C-frame 30. The sensors 44, 46 are connected to the control device 16. Such a joining device 10 is generally known and is disclosed in greater detail in, for example, the document EP 1 228 824 B1, and reference is hereby made to the full scope of the disclosed content of said document.

In the case of a punch-riveting process, the workpieces 18, 20 are placed on the die 32. The punch 34 is then moved, by means of the punch drive 36, in the direction towards the die 32. In this case, the hold-down device 40 first contacts a surface of the uppermost workpiece 20 and presses the workpieces 18, 20 together in the joining direction. This is because there might be, for example, an air gap 50 present between the workpieces 18, 20. There might be an adhesive 52 present in the air gap 50.

Subsequently, the punch rivet 22 finally contacts the surface of the uppermost workpiece 20 and is driven into the workpiece arrangement, in a manner known per se, a positive and/or non-positive connection being produced between the workpieces 18, 20. The forces applied by the punch 34 during this can in this case result in the C-frame being bent up, as indicated schematically at 54.

The control device is further connected to a display device 58, which can be a monitor, a printer or the like.

During the joining process, from the signals of the sensors 44, 46 the control device 16 calculates a relative travel S_{R}, which is calculated by forming a difference between the punch travel S_{S} and the hold-down device travel S_{N}. The relative travel S_{R} might also be acquired by a single sensor, disposed between the punch 34 and the hold-down device 40.

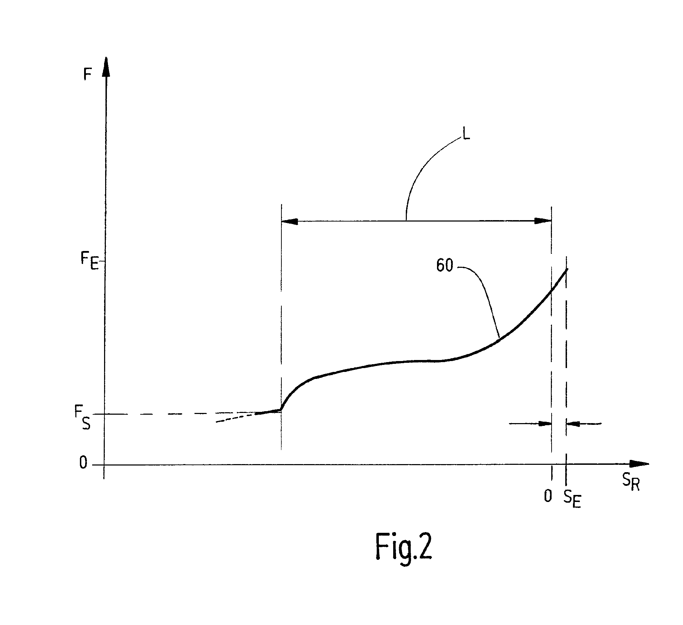

For the purpose of monitoring the joining process, the punch force F exerted by the punch 34 is plotted over the relative travel S_{R}. Such a joining curve is indicated schematically in Fig. 2, and denoted by 60.

Starting from an initial state, not represented in greater detail, the punch force F_{E} is increased until it finally attains a threshold value F_{S}. From this instant, the plotting of the joining curve 60 commences. In a first travel portion of the relative travel S_{R} that follows this, the punch force F increases steeply. The joining curve 60 then has a somewhat flatter course, which then again goes into a steeper portion, as far as an end point. In this case, at the instant of the end of the joining process, the punch force F_{E} is plotted, as is the end position S_{E} acquired in this case.

Before such joining processes are performed, an adjustment pass is performed, in which a relative reference position between the punch 34 and the hold-down device 40 is determined. In the present case, this is effected in that a reference workpiece, having a very hard surface, is placed on the die, and the punch is then moved down, but with no punch rivet 22 being inserted. The relative reference position, which is denoted by "0" in Fig. 2, is that position at which an end face of the punch 34 is in flush alignment with an end face of the hold-down device 40. This relative reference position is easily determined in this adjustment pass, in that both the punch 34 and the hold-down device 40 are brought into contact with the reference workpiece.

Fig. 2 shows that, in the determination of the joining curve 60, the length L of the punch rivet used can be acquired. The length L is calculated from the instant at which the joining curve 60 commences (upon attainment of the threshold value F_{S}), as far as the relative reference position. The end position S_{E} in this case can go beyond the relative reference position, as represented. In this case, the punch rivet is driven in under the surface of the uppermost workpiece 20. The "negative" rivet-head protrusion achieved as a result of this can be determined from the distance between the end position S_{E} and the relative reference position, as represented in Fig. 2. It is understood that a positive rivet-head protrusion can also be acquired. In this case, the end position S_{E} is located to the left of the relative reference position 0 in Fig. 2. In the case of the punch rivet being in flush alignment with the surface of the uppermost workpiece 20, the end position S_{E} is located on the relative reference position.

The acquisition of a joining curve 60, which is represented as a function of the punch force F over the relative travel S_{R}, makes it possible to eliminate from the joining curve setting influences that are caused, for example, by the adhesive 52, by differing adhesive, by an air gap 50, by bending-up of the counterforce structure, as shown at 54, etc.

As a result of the plotting of such a riveting curve, the riveting curve is focussed purely upon the penetration of the rivet into the plates, such that successive riveting curves from successive punch-riveting processes can be compared.

## Claims

1. Method for monitoring a mechanical joining process, in particular a punch-riveting or clinching process, the joining process being performed by means of a joining tool (12), which has a frame (30), a punch (34) that is displaceable on the frame (30) along a joining axis (38), a die (32) that is mounted on the frame (30), and a hold-down device (40), which is mounted in an axially displaceable manner on the punch (34) and biased in a joining direction, the method comprising the steps, during the joining process:
- acquiring the punch force (F) exerted by the punch (34),
- acquiring the relative travel (S_{R}) of the punch (34) in relation to the hold-down device (40); and
- plotting a joining curve (60) of punch force (F) over the relative travel (S_{R}).

2. Method according to Claim 1, the punch travel (S_{S}) of the punch (34) relative to the frame (30), and the hold-down device travel (S_{N}) of the hold-down device (40) relative to the frame (30), being acquired during the joining process, and the relative travel (S_{R}) being acquired by forming a difference between the punch travel (S_{S}) and the hold-down device travel (S_{N}).

3. Method according to Claim 1 or 2, the relative travel (S_{R}) being measured directly during the joining process.

4. Method according to any one of Claims 1 - 3, a plurality of joining curves being plotted and represented in a superimposed manner.

5. Method according to any one of Claims 1 - 3, a relative reference position (0) between the punch (34) and the hold-down device (40) being determined before the joining process.

6. Method according to Claim 5, the relative reference position (0) being that position of the punch (34), relative to the hold-down device (40), at which a punch end face is flush with an end face of the hold-down device.

7. Method according to Claim 1 - 6, the plotting of the joining curve (60) being commenced in dependence on a punch force threshold (F_{S}) or a particular relative position between the punch and the hold-down device.

8. Method according to any one of Claims 1 - 7, the length (L) of a joining element (22) used in the joining process being determined.

9. Method according to any one of Claims 1 - 8, an end position (S_{E}) of the joining process being monitored on the basis of the plotted joining curve (60).

10. Joining device (10) comprising a joining tool (12), which has a frame (30), a punch that is displaceable on the frame (30) along a joining axis (38), a die (32) that is mounted on the frame (30), and a hold-down device (40), which is mounted in an axially displaceable manner on the punch and biased in a joining direction, and comprising a control device (16) that is realized and set up to execute the method according to any one of Claims 1 to 9.
